# EUROPEAN PATENT APPLICATION

(11) **EP 1 955 984 A1**
(43) Date of publication of application: **13.08.2008**
(21) Application number: 06824233.8
(22) Date of filing: 30.11.2006
(51) Int. Cl.: C04B 7/02, C04B 7/04, C04B 7/06

(54) **PRODUCTION METHOD AND CEMENT COMPOSITIONS WHICH RAPIDLY ACQUIRE GOOD STRENGTH AND WHICH ARE RESISTANT TO CORROSION**

(30) Priority: 30.11.2005 MX PA05012911; 21.12.2005 MX PA05014114; 21.12.2005 MX PA05014120
(71) Applicant: CONCRETOS TRANSLÜCIDOS, S. de R.L. de C.V., C.P. 01020 Mexico D.F. (MX)
(72) Inventor: GALVÁN CÁZARES, Sergio Omar, C.P. 01020, México, D.F. (MX); SOSA, GUTIÉRREZ, Joel, C.P. 01020, México, D.F. (MX)
(74) Representative: Ungria Lopez, Javier
(86) International application number: PCT/MX2006/000139
(87) International publication number: WO 2007/064186

(57) **Abstract**

The invention relates to a method for producing a cement which rapidly acquires good strength and which Is resistant to corrosion, using a novel chemical production technology. The inventive method can be used to produce cements having properties rendering same suitable for use in diverse fields including the construction of oil wells, pipelines, etc. The invention also relates to a Portland-type cement which rapidly acquires mechanical strength, which has a shelf-life of up to 20 years under normal service conditions and which contains 4% molybdenum trioxide. The inventive cement is **characterised in that** it has a fineness of more than 4200 cm2/g. The invention is also **characterised in that** the cement has a minimum strength of 900 psi at 100° F for 8 hours from the moment of setting and in that the cement has a minimum strength of 2000 psi at 140° F after 8 hours from setting, without the addition of any additives, which enables the water reduction necessary in order to achieve a predetermined slump.

## Description

### FIELD OF THE INVENTION

This invention relates to cement compositions having the characteristics of quickly acquiring high-mechanical strength well as resistance to corrosion caused by various agents, which makes it useful in many applications such as oil drilling rigs.

### BACKGROUND OF THE INVENTION

It is well known that manufacturing Portland cement includes the stages of mixing and grinding clay and limestone materials that have been previously crushed, in which the mixture is reduced to a fine powder. The composition of this mixture must remain constant within narrow limits because any distancing from the optimum point would result in a loss of quality. The mixing and grindings can be performed dry (dry method) or with water (wet method). In any case, whatever the preparation method, it is essential for the mixture to have the correct dosage, which is finally ground down and thoroughly mixed before entering the kiln.

In general, all types of materials are used to make Portland cement, which provide the required chemical composition when calcined. However, taking economy into account, the number of such materials is limited. Suitable limestone materials are: gypsum cement rock, chalk, marl, seashells and waste from alkali production.

The wide variations In the response to additions seen among the batches of API-class cement and the severe conditions found in most oil rigs are factors requiring the preparation of grout design systems that are highly sophisticated and difficult to control onsite because they are not very practical and, above all, are very expensive because of the associated high additions content and possible excessive amount of design time.
However, some components have been found to be harmful in cement and this still further limits the use of gypsums and marls etc, which are otherwise suitable.

In general, gypsum and other calcareous substances rich in magnesium carbonate are unsuitable because an amount exceeding 5% is considered harmful in Portland cement and is not permitted in normal specifications. Veins of chalk or pyrites may mean that the sulphate content is excessive. Chalk sometimes contains nodules of flintstone that must be removed, and marl could contain excessive amounts of siliceous sand.

Pure gypsum is hard and requires a lot of energy during grinding. However, if it is found mixed with slate, it is softer. Cement rock, which is found in great abundance in the Lehigh Valley, is a gypsum containing such an amount of clay material that it is not necessary to use a mixture made with rich rocks and poor in lime.

Marl is a sedimentary calcareous material that forms at the bottom of certain lakes and is often mixed with a large amount of small shells. Significant formations of marl and seashells are exploited in Michigan and in Norfolk, Virginia,. In Texas and Redwood California, there are cement works that successfully work with limestone materials form old oyster beds. Chalk is employed in Louisiana and on a large scale in the UK and the rest of Europe. In Michigan, the precipitated calcium carbonate obtained as a waste product from the manufacture of caustic soda in the Le Blanc process, has been employed in Portland cement production.

The following materials can be used to make Portland cement: clay, slate, schist, blast furnace slag, ash and cement rock.

It has also been known for a long time that tricalcium silicate only exists in a metastable state at ordinary temperatures and that it disassociates into CaO and C₂S when the temperature is held between 1,000 and 1,300 degrees centigrade for long periods. The magma of interstitial material, within which the crystals of tricalcium and bicalcium silicate appear, is mainly composed of the phases that were liquid at the clinkerisation temperature.

When CaO and Al₂O₃ are heated together they can form four compounds, of which only C₃A, C₃A₃ or C₁₂A₇ can exist in the lime-rich mixtures of Portland cement.

If heated to 1,535 degrees centigrade, the quadruple point Is reached at which the CaO and C₃A exist in equilibrium with liquid. It can be seen that the liquid composition at this moment is 57% CaO and 43% Al₂O₃. On removing heat without lowering the temperature to 1,535 degrees centigrade, is the formation of C₃A and the disappearance of CaO in accordance with the decrease in temperature relative of liquids to solids.

During the manufacture of Portland cement, the available temperatures are not high enough to convert all the materials into liquid form. In such a case, some of the reactions by which the compounds are produced, have to occur between solid and liquid states and even between two hot solids in contact. For this to be successful, time is required for these reactions to complete, which will depend on various factors, such as the chemical composition and nature of the raw materials, the surface area presented by the grains, the degree of obtained dissemination in the various phases of powdered materials and the temperature.

In the same way, since these reactions continue during the cooling process, the degree of cooling required to maintain equilibrium depends on the composition. Finally, rapid cooling would cause part of the liquid to solidify in a vitreous form, whereas it would have crystallised with slower cooling.

The mixture is then taken to a rotary kiln in which it is slowly heated to the clinkerisation point. The water and carbon dioxide are expelled prior to reaching this point. On approaching the highest temperatures, chemical reactions take place between the raw mixture components. New compounds are formed during these reactions, with some of them melting, leaving the load partially melted.

The clinker then falls onto one of the various coolers or onto the pile of clinker where it cools, sometimes by means of a water spray. When cool, it is mixed with a carefully calculated amount of fired or raw gypsum and ground down until it is a fine powder, whereupon it is commercial grade Portland cement.

Cement obtained in this way has characteristics similar to rock when it hardens. It behaves like a high-density dielectric solid that does not allow light to pass through it and it has high volumetric weight and mechanical behaviour similar to rock.

Gypsum or calcium sulphate is added in small amounts to the final grinding operation to control the setting temperature and prevent false setting. However, if the amount of gypsum is not correctly monitored, a small variation in the established proportions of the crushed rock mixture could be sufficient to completely alter the characteristics of the mixture or the cement properties.

Molybdenum is a chemical element with symbol Mo, atomic number 42 and atomic weight 95.94 and is one of the transition elements. It is a silvery-grey metal having a density of 10.2 g/cm³ and a melting point of 2,610 degrees centigrade.

Molybdenum forms compounds in which oxidation states 2, 2+, 3+, 4+, 5+ and 6+ are present. It has not been observed as an ionisable cation; however, cationic species of molybdenum are known. Molybdenum chemistry is highly complex and, with the exception of halogenides and chalcogenides, there are very few known simple compounds.

Molybdenum trioxide is a very common stable oxide that has been used for several decades to prevent corrosion in metals and various ceramics. In general, it is a laboratory species.

### OBJECT OF THE INVENTION

In order to eliminate these and other disadvantages, a Portland cement manufacturing method has been designed that will allow a conductive cement to be manufactured that is corrosion-resistant and can be used in any foundations, e.g., a conductive cement that is corrosion-resistant that can be used in oil well foundations in wet-method rotary kilns that is intended to be protected by the following description.

One purpose of this invention is to provide a Portland cement that acquires early high strength.

Another purpose of this invention is to provide a corrosion-resistant Portland cement for oil wells.

### DESCRIPTION OF THE INVENTION

The first step in mixing materials should take place in the quarry using steam shovels, with one shovelful of clay and two of stone, or two wagonloads of one rock and three of the other. The rock is then passed through a battery of crushing mills and be converted into gravel.

The clinkerisation process should take place between 1.520 and 1,580 degrees centigrade. The raw materials consist of between 53% and 59% of Al₂O₃ and between 47% and 41 % of CaCO₃ in order to obtain a clinker with a composition containing less than 0.7% silicon oxide and less than 0.2% of iron oxide.

The mixture is then taken to a rotary kiln in which it is slowly heated to 1,535 degrees centigrade up to the clinkerisation point. The water and carbon dioxide are expelled prior to reaching this point. On approaching the highest temperatures, chemical reactions take place between the raw mixture components. New compounds are formed during these reactions, with some of them melting, leaving the load partially melted. The clinker then falls onto one of the various coolers or onto the pile of clinker where it cools.

If the mixture is prepared as indicated, then through constant monitoring of its alumina content, various modifications can be made to the clay or gypsum amounts when they are added to the grinders, if these modifications are necessary to maintain an approximate constant composition. However, if it is seen that the crushed rock in the tanks has higher or lower alumina content, the content of two or more tanks is mixed so that mixture proportions are as close as possible to the suitable composition.

Clinker cooling can be produced by a closed cooler using air circulation, in which the clinker cooling air is employed as secondary or even primary kiln combustion. This allows economy in fuel as well as better clinker calcination, immediate use of clinker in grinding and enhanced grinding, together with better strength values and volume stability in the cement.

When the clinker is taken to the mills, it is mixed with a carefully calculated amount of retardant consisting of plaster stone (CaSO₄·2H2O) or baked plaster (CaSO₄*·*½ H₂O) because, without this, when the cement is mixed with water to form concrete, it could set too quickly.

The average specifications of this cement are: 1.97% of tricalcium aluminate (C₃A); 61% of tricalcium silicate (C₃S); 0.40% of insoluble residue; 2.70% of sulphur trioxide; 1.65% magnesium oxide; sodium citrate in a content of between 0.05% and 0.12%; 0.20% of total alkali (Na₂O); and 4% molybdenum trioxide content to increase corrosion resistance.

In accordance with the manufacturing method of this invention, the calcined gypsum that is added to the clinker comprises a mixture of hemihydrite and anhydrite and the total amount of this should be between 15% and 20% of the total weight sulphur trioxide present in the cement. The proportion of hemihydrite and anhydrite mixture should be one-to-one by weight.

The grinding of the raw or calcined gypsum is limited by the molybdenum dioxide and trioxide content that is added to the clinker. The molybdenum dioxide content added to the clinker must be such that the cement or final product has a content of between 0.5% and 6%, with the optimum being 4% of molybdenum dioxide for a 60% clinker content. The molybdenum dioxide content must be such that the cement or final product has a content of between 0.5% and 6%, with the optimum being 4% of molybdenum dioxide for a 60% clinker content. Between 0.05% and 0.12% of sodium citrate should be added.

Alumina can be optionally added, ensuring that the cement of the final product has a 35% alumina content for a clinker content of 60%. This latter addition is useful for obtaining an aluminous cement.

The mixture of clinker and plaster stone or baked plaster Is ground down with a surface area that is specified for each type of cement because the cement will develop its strength much quicker the more finely it is ground down. It is in this process when limestone or calcined gypsum is added to the clinker.

The grinding process must ensure a fineness of between 3,450 and 4,200 cm²/g, which should be monitored by the amount of material passing through a number 100 or 200 sieve (free mesh span of 0.147 and 0.074 millimetres respectively). In the case of the cement not having the mentioned fineness, then a new grinding stage must be initiated until the established value is obtained.

Once ground down and while still warm from the grinding process, it should be stored in silos for at least three days, but no more than five, so that all the small quantities of lime that did not combine during the calcination process can hydrate and carbonate through reactions with water and carbon dioxide in the air and thus lose the expansion resulting from these remaining particles without combining with the lime.

## Claims

1. A cement composition having corrosion-resistance and early acquisition of high-strength, comprising:
1.97% tricalcium aluminate (C₃A);
61% of tricalcium silicate (C₃S); 0.40% of insoluble residue;
2.70% of sulphur trioxide;
1.65% magnesium oxide;
between 0.06% and 0.12% of sodium citrate;
0.2% total alkali (Na₂O); and a
0.5-6%, with an optimum of 4% molybdenum trioxide content to increase corrosion resistance.

2. Composition of cement with early acquisition of high-strength and corrosion-resistance in accordance with claim 1, **characterised in that** it also contains 4% of molybdenum trioxide to increase corrosion resistance and reduce the time to acquire mechanical strength.

3. Composition of cement with early acquisition of high-strength and corrosion-resistance in accordance with claim 1, **characterised in that** it also contains between 0.05% and 0.2% of sodium citrate.

4. Composition of cement with early acquisition of high-strength and corrosion-resistance in accordance with claim 1, in **characterised in that** the inviolable residue (IR) content is 0.40%.

5. Portland cement with early acquisition of high-mechanical strength, having a composition in accordance with any of claims 1, 2 or 3, **characterised in that** it maintains a 3.1% of free fluids.

6. Portland cement with early acquisition of high-mechanical strength, having a composition in accordance with any of claims 1. 2 or 3, **characterised in that** it has a fineness exceeding 3,450 cm²/g.

7. Portland cement with early acquisition of high-mechanical strength, having a composition in accordance with any of claims 1, 2 or 3, having a minimum strength of 2,000 psi after eight hours setting at 140°C.

8. Cement composition with early acquisition of high-mechanical strength and corrosion resistance, having a composition in accordance with any of claims 1, 2 or 3, **characterised in that** it permits cathode protection of the reinforcement steel, together with any other metal material found in the reinforced concrete.

9. Portland cement with early acquisition of high-mechanical strength, having a composition in accordance with any of claims 1, 2 or 3, **characterised in that** it permits high-sulphate resistance, once set.

10. Portland cement with early acquisition of high-mechanical strength, having a composition in accordance with any of claims 1, 2 or 3, **characterised in that** it maintains a useful service lifetime of up to 35 years under normal service conditions.

11. Portland cement with early acquisition of high-mechanical strength, having a composition in accordance with any of claims 1, 2 or 3, **characterised in that** it acquires 70% of its strength within eight hours of having set.

12. Cement composition with early acquisition of high-mechanical strength and corrosion resistance, in accordance with any of claims 1, 2 or 3, **characterised in that** it permits a reduction of up to 10% in the water required to obtain a determined tempering.

13. Portland cement with early acquisition of high-mechanical strength, having a composition in accordance with any of claims 1, 2 or 3 **characterised in that** it presents a thickening time of 145 minutes on setting, without any additions.

14. Portland cement with early acquisition of high-mechanical strength, having a composition in accordance with any of claims 1, 2 or 3 **characterised in that** it has a minimum strength of 900 psi after 24 hours setting at 100°C.

15. Portland cement that is corrosion resistant for oil wells, **characterised in that** it has a composition in accordance with any of claims 1, 2 or 3, having a molybdenum dioxide content between 0.5% and 6%, with an optimum value of 4% to increase corrosion resistance.

16. Portland cement that is corrosion resistant for oil wells, **characterised in that** it has a composition in accordance with any of claims 1, 2 or 3 **characterised in that** it has a fineness exceeding 3,700 cm²/g.

17. Portland cement that is corrosion resistant for oil wells, **characterised in that** it has a composition in accordance with any of claims 1, 2 or 3 **characterised in that** it presents a thickening time of 145 minutes on setting, without any additions.

18. Portland cement that is corrosion resistant for oil wells, **characterised in that** it has a composition in accordance with any of claims 1, 2 or 3, **characterised in that** it acquires a consistency of 17 bc at 15 minutes and 21 bc at 30 minutes, once hydrated.

19. Portland cement that is corrosion resistant for oil wells, having a composition in accordance with any of claims 1, 2 or 3, **characterised in that** it permits cathode protection of the reinforcement steel, together with any other metal material found in the reinforced concrete.

20. Portland cement that is corrosion resistant for oil wells, having a composition in accordance with any of claims 1, 2 or 3, **characterised in that** it maintains a useful service lifetime of up to 20 years under normal service conditions.

21. Portland cement that is corrosion resistant for oil wells, having a composition in accordance with any of claims 1, 2 or 3, having a minimum strength of 740 psi after eight hours of setting at 100°C.

22. Portland cement that is corrosion resistant for oil wells, having a composition in accordance with any of claims 1, 2 or 3, having a minimum strength of 2,000 psi after eight hours of setting at 140°C.

23. Aluminous cement having rapid acquisition of mechanical strength and the composition described in claim 1 **characterised in that** is has a fineness exceeding 3,450 cm²/g.

24. Aluminous cement having rapid acquisition of mechanical strength and the composition described in claim 1 **characterised in that** it has a proportion of hemihydrite and anhydrite mixture of one-to-one by weight.

25. Aluminous cement having rapid acquisition of mechanical strength and the composition described in claim 1 **characterised in that** it acquires 70% of its final strength after 96 hours, once hydrated.

26. Aluminous cement having rapid acquisition of mechanical strength and the composition described in claim 1, having a 35% alumina content.

27. Aluminous cement having rapid acquisition of mechanical strength and the composition described in claim 1, **characterised in that** it maintains a useful service lifetime of up to 70 years under normal service conditions.

28. Aluminous cement having rapid acquisition of mechanical strength and the composition described in claim 1, **characterised in that** it permits rapid acquisition of mechanical strength, once set.

29. Aluminous cement having rapid acquisition of mechanical strength and the composition described in claim 1, **characterised in that** it has high refractory strength.

30. Method of manufacturing cement having rapid acquisition of mechanical strength and corrosion resistant comprising the following stages:
• mixing raw materials in the quarry using steam shovels, with one shovelful of clay and two of stone, or two wagonloads of the cement rock and three of the other,
• passing the rock through a battery of crushing mills and be converted into gravel;
• carrying out the clinkerisation process at between 1,520 and 1,580 degrees centigrade;
• the mixture is then taken to a rotary kiln in which it is slowly heated to 1,535 degrees centigrade up to the clinkerisation point, until the water and carbon dioxide is expulsed before reaching the clinkerisation zone;
• tipping the clinker onto one of the various coolers or onto the pile of clinker where it cools;
• cooling the clinker by air circulation, in which the clinker cooling air is employed as secondary or even primary kiln combustion;
• taking the clinker to the mills for grinding, where a retardant is added consisting of plaster stone (CaSO₄·2H₂O) or baked plaster (CaSO₄·½H₂O);
• adding gypsum between 15% and 20% of the total weight of sulphur trioxide present in the cement to the clinker, where the gypsum is a mixture of hemihydrite and anhydrite should be one-to-one by weight;
• grinding the mixture of clinker and raw of calcined gypsum and the other components;
• adding the plaster stone or baked plaster to the clinker;
• through the grinding process obtaining a fineness of between 3,450 and 4,200 cm²/g, or better, which should be monitored by the amount of material passing through a number 100 or 200 sieve (free mesh span of 0.147 and 0.074 millimetres respectively);
• once ground down and while still warm, it should be stored in silos for at least three days, but no more than five.
